# FASCICULE DE BREVET EUROPEEN

(11) **EP 2 012 062 B1**
(45) Date de publication et mention de la délivrance du brevet: **28.08.2019**
(21) Numéro de dépôt: 08159738.7
(22) Date de dépôt: 04.07.2008
(51) Int. Cl.: F23R 3/60, F23R 3/50, F23R 3/00

(54) **Chambre de combustion comportant des déflecteurs de protection thermique de fond de chambre et moteur à turbine à gaz en étant équipé**
Brennkammer, die mit Hitzeschutzdeflektoren für den rückwärtigen Brennkammerteil ausgestattet ist, und damit ausgestatteter Gasturbinenmotor
Combustion chamber comprising deflectors for thermal protection of the chamber dome and gas turbine engine equipped with same

(30) Priorité: 04.07.2007 FR 0704828
(43) Date de publication de la demande: 07.01.2009
(73) Titulaire: Safran Aircraft Engines, 75015 Paris (FR)
(72) Inventeur: Hernandez, Didier, 77720, Quiers (FR); Noel, Thomas, 94300, Vincennes (FR)
(74) Mandataire: Gevers & Orès

(56) Documents cités:
- EP-A- 1 118 806
- EP-A2- 1 731 839
- FR-A- 2 637 675
- US-A- 4 380 896
- US-A- 4 843 825
- US-A- 6 164 074

## Description

La présente invention se rapporte au domaine technique des chambres de combustion pour moteur à turbine à gaz. Elle vise en particulier le fond de chambre. Elle vise enfin un moteur à turbine à gaz tel qu'un turboréacteur équipé d'une telle chambre de combustion.

Dans tout ce qui suit, les termes « axial », « radial », « transversal » correspondent respectivement à une direction axiale, à une direction radiale, et à un plan transversal du moteur, et les termes « amont » et « aval » correspondent respectivement au sens de l'écoulement des gaz dans le moteur.

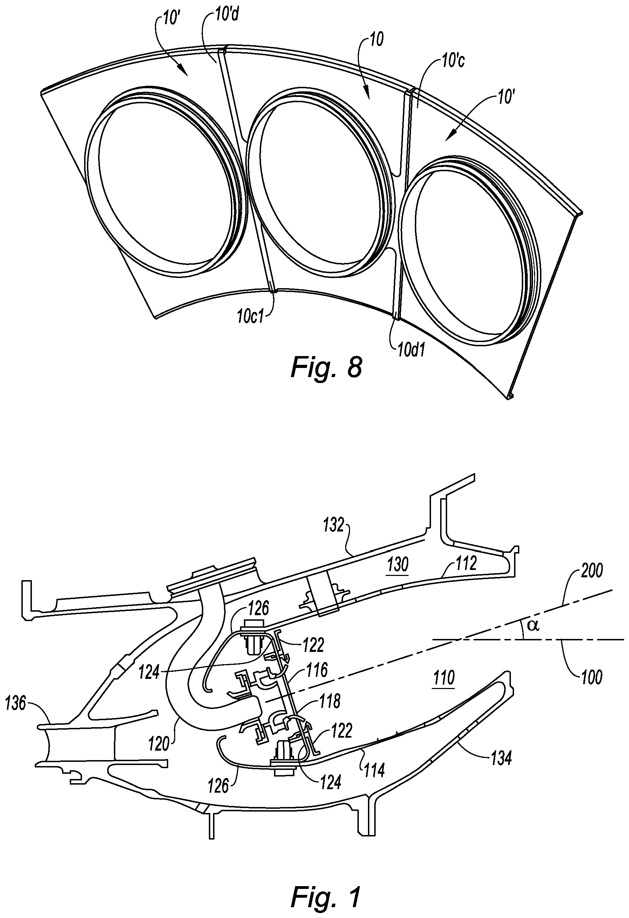

Une chambre de combustion conventionnelle divergente est illustrée sur la figure 1, qui est une coupe axiale montrant une moitié de la chambre de combustion, l'autre moitié de celle-ci se déduisant par symétrie par rapport à l'axe du moteur (non représenté). La chambre de combustion 110 est logée en aval d'une chambre de diffusion 130 qui est un espace annulaire défini entre un carter externe 132 et un carter interne 134, dans lequel est introduit un comburant, air ambiant, comprimé provenant en amont d'un compresseur (non représenté) par l'intermédiaire d'un conduit annulaire de diffusion 136.

Cette chambre de combustion divergente 110 comporte deux parois concentriques : l'une externe 112 et l'autre interne 114, qui sont coaxiales et sensiblement coniques. Les parois s'évasent de l'amont vers l'aval. Les parois externe 112 et interne 114 de la chambre de combustion 110 sont reliées entre elles, vers l'amont de la chambre de combustion par un fond de chambre 116.

Le fond de chambre 116 est une pièce annulaire tronconique, qui s'étend entre deux plans sensiblement transversaux en s'évasant de l'aval vers l'amont. Le fond de chambre 116 se raccorde à chacune des deux parois externe 112 et interne 114 de la chambre de combustion 110. Le fond de chambre 116 présente une faible conicité. Il est doté de systèmes d'injection 118 à travers lesquelles passent des injecteurs 120 qui introduisent du carburant à l'extrémité amont de la chambre de combustion 110 où se déroulent les réactions de combustion.

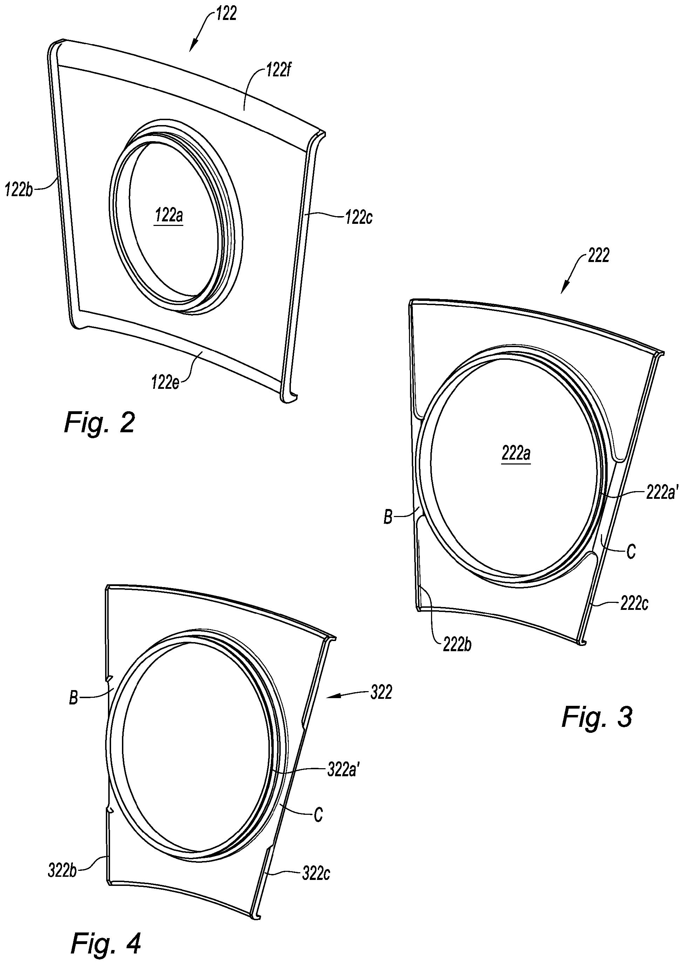

Ces réactions de combustion ont pour effet de faire rayonner de la chaleur de l'aval vers l'amont en direction du fond de chambre 116. Ainsi en fonctionnement le fond de chambre est-il soumis à de fortes températures. Afin de le protéger, des écrans thermiques sectorisés, encore appelés déflecteurs 122 sont interposés entre le foyer et les parois du fond de chambre. Ces déflecteurs 122, dont un est représenté sur la figure 2 sont des plaques sensiblement planes fixées par brasage sur le fond de chambre 116 avec une ouverture centrale 122a pour le passage de l'injecteur. Ils comprennent deux murets latéraux 122b, 122c le long des bords radiaux, tournés vers la paroi du fond de chambre et deux languettes de guidage d'air le long des bords transversaux tournés vers le foyer et ménageant un espace avec les parois 114 et 112, interne respectivement externe, de la chambre. Les déflecteurs sont refroidis par les impacts de jets d'air de refroidissement pénétrant dans la chambre de combustion 110 à travers des orifices de refroidissement 124 percés dans le fond de chambre 116. L'air formant ces jets, s'écoulant de l'amont vers l'aval, est guidé par des carénages de chambre 126, traverse le fond de chambre 116 à travers les orifices de refroidissement, et vient impacter la face amont des déflecteurs 122. L'air est ensuite guidé radialement vers l'intérieur et l'extérieur du foyer pour initier le film de refroidissement des parois 114 et 112 respectivement.

Ce guidage le long des déflecteurs est assuré par les murets latéraux orientés radialement. Ces murets ont aussi une fonction d'étanchéité. En étant au contact ou en assurant un jeu minimal avec le fond de chambre, Ils empêchent l'air de venir s'immiscer entre deux déflecteurs adjacents, pénétrer dans le foyer et perturber la combustion. Ces perturbations ont une incidence sur la pollution et sont à éviter. En effet les performances en rejets de polluants, CO et CHx sont susceptibles d'être dégradées par l'introduction parasite de cet air froid particulièrement au régime de ralenti moteur où le jeu est plus important.

Une telle chambre de combustion est décrite dans le document FR 2 637 675.

L'évolution actuelle des moyens d'alimentation de la chambre en air et en carburant conduit à la réalisation de systèmes d'injection dont l'intégration dans le fond de chambre est plus difficile. Par exemple les systèmes d'injection de type multipoints sont de plus grand diamètre car une part importante de l'air admis dans la chambre les traverse ; ils occupent alors plus de place sur le pourtour du fond de chambre laissant un intervalle plus faible entre deux systèmes adjacents.

On retrouve une situation équivalente lorsqu'on est amené à augmenter le nombre de systèmes d'injection pour une même chambre dans le but de réduire les zones mortes entre deux injecteurs adjacents ou encore lorsque les dimensions du fond de chambre sont réduites pour un même nombre de système d'injection.

Il s'ensuit dans ces cas que les ouvertures de centrage des déflecteurs sont proches les unes des autres. On dispose alors de peu de place pour aménager des murets latéraux sur les déflecteurs.

Les figures 3 et 4 montrent deux solutions que l'on pourrait envisager en appliquant la technique actuelle à une telle situation. Ainsi la figure 3 le déflecteur 222 a un muret 222b, 222c, de part et d'autre des bords latéraux qui occupe toute la zone B, C, entre le bord du déflecteur et la collerette 222a' formant le bord de l'ouverture 222a. Cette solution permettrait de conserver l'étanchéité mais en raison de cette surépaisseur le déflecteur ne peut être refroidi dans cette zone.

Sur la figure 4 la solution consiste à interrompre le muret 322b, 322c, dans la zone critique entre les bords latéraux du déflecteur 322 et la collerette 322a' sur le bord de l'ouverture 322a. L'espace permet de refroidir le déflecteur par impact de jets d'air mais au détriment de l'étanchéité.

L'invention a pour objectif de remédier à ce problème
L'invention apporte une solution à ce problème par les caractéristiques de la revendication indépendante 1. Des autres caractéristiques avantageuses sont décrites dans les revendications dépendantes.

Le document EP 1 731 839 A2 décrit le préambule de la revendication 1.

Grâce à la solution de l'invention la zone critique située entre deux ouvertures adjacentes est à la fois étanche par le couvre joint et refroidie car le couvre joint permet l'agencement d'un espace alimenté en air de refroidissement.

Plus particulièrement la chambre présente les caractéristiques suivantes :
Le logement est formé par un décrochement de la paroi ;
Les déflecteurs comprennent un épaulement par lesquels ils s'appuient sur le bord des ouvertures des systèmes d'injection.

L'épaulement ménage un jeu entre la paroi du fond de chambre et le couvre joint dans la zone comprise entre deux ouvertures adjacentes des systèmes d'injection de carburant.

Les bords transversaux des déflecteurs comprennent une portion de paroi incurvée, les logements étant ménagés également le long des bords longitudinaux de ladite portion incurvée.

Les déflecteurs comprennent un couvre joint le long d'un bord longitudinal et un bord sans couvre joint le long de l'autre bord longitudinal les deux bords étant complémentaires pour venir s'adapter à un bord d'un autre même déflecteur disposé bord à bord.

Une partie des déflecteurs comprend un couvre joint le long des deux bords longitudinaux.

Une partie des déflecteurs comprend deux bords longitudinaux complémentaires des couvre joints des déflecteurs précédents.

D'autres caractéristiques et avantages ressortiront de la description qui suit de modes de réalisation de l'invention en référence aux dessins annexés sur lesquels
- La figure 1 représente en coupe axiale une moitié de chambre de combustion de type divergent en soi connue ;
- La figure 2 montre un déflecteur de l'art antérieur utilisé pour la protection thermique de la paroi du fond de chambre de combustion ;
- La figure 3 montre une configuration de déflecteur selon l'enseignement de l'art antérieur ;
- La figure 4 montre une autre configuration selon l'enseignement de l'art antérieur ;
- La figure 5 montre, vus en perspective, deux déflecteurs de protection thermique du fond de chambre de l'invention;
- La figure 6 montre le détail du couvre joint sur les déflecteurs de la figure 5 ;
- La figure 7 montre le détail de la zone sur la chambre de combustion entre deux ouvertures ;
- La figure 8 montre une variante de réalisation de l'étanchéité entre deux déflecteurs adjacents ;

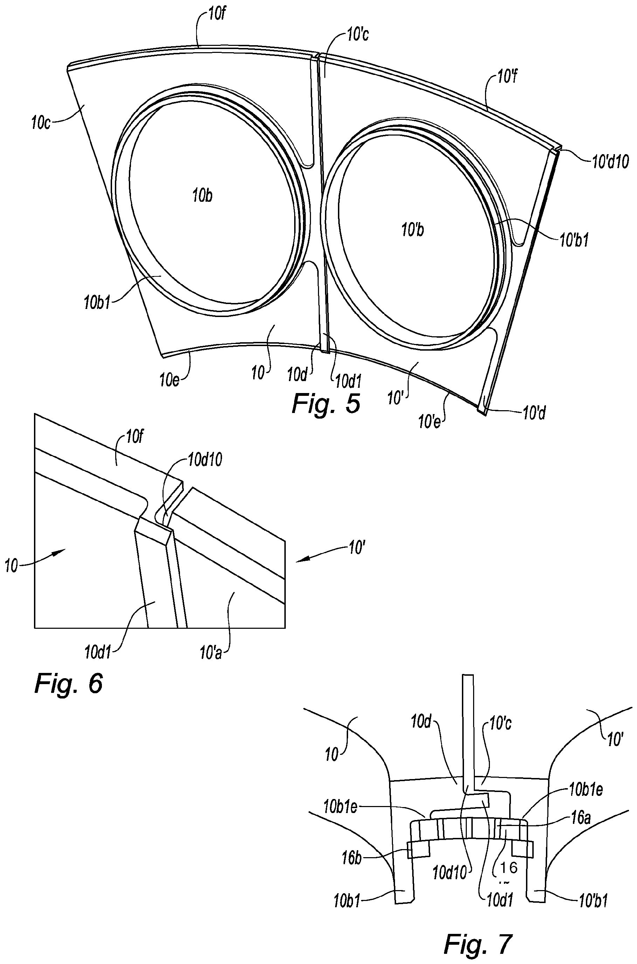

On se reporte maintenant aux figures 5 à 7 représentant un premier mode de réalisation de l'étanchéité entre deux déflecteurs 10 et 10' en matériau réfractaire disposés côte à côte sur le fond de chambre. Le déflecteur 10 comprend une partie plane 10a avec une ouverture centrale 10b correspondant au logement d'un injecteur non représenté. Sur la figure 5, l'ouverture est bordée d'une collerette 10b1 pour la fixation dans le fond de chambre. Le déflecteur comprend deux bords longitudinaux orientés selon une direction radiale par rapport à l'axe du moteur : le bord longitudinal 10c et le bord 10d. Ils sont rectilignes. Le déflecteur 10 comprend aussi deux bords transversaux 10e et 10f à la fois arrondis, pour suivre la courbure de la chambre de combustion, et incurvés en direction de l'intérieur de la chambre de combustion pour le guidage de l'air. Le bord 10c, à gauche sur la figure 5, est rectiligne et suit le profil radial du déflecteur. Le bord 10d de l'autre côté comprend un décrochement arrière par rapport à la face visible sur la figure 5, formé par une languette 10d1 qui prolonge la face arrière de la paroi du déflecteur. Ce décrochement forme un logement longitudinal 10d10 pour le bord 10'c du déflecteur adjacent 10'. Ce déflecteur 10' est identique au déflecteur 10. Il comprend une partie plane 10'a, deux bords longitudinaux 10'c et 10'd et deux bords transversaux arrondis et incurvés 10'e et 10'f. Le bord 10'd comprend une languette longitudinale 10'd1 ménageant un logement 10'd10.

Sur l'exemple des figures 5 à 7, les déflecteurs sont tous identiques et sont montés sur le pourtour du fond de chambre 16, non représenté sur les figures 5 et 6, en étant fixés par les collerettes 10b1 et 10'b1, des ouvertures 10b, 10'b, pour les systèmes d'injection. Il y a un système d'injection par déflecteur. Le couvre joint formé par la languette 10d1 de chacun des déflecteurs, recouvre le bord 10'c du déflecteur adjacent 10' sur une largeur suffisante pour s'accommoder des variations de dilatation de la chambre de combustion. Chaque logement 10d10, 10'd10 est agencé pour retenir le bord 10c, 10'c du déflecteur adjacent de telle manière que les fuites entre deux déflecteurs adjacents soient réduites sinon totalement éliminées quel que soit le régime moteur.

On voit en coupe sur la figure 7, l'agencement entre les déflecteurs 10 et 10' d'une part et le fond de chambre 16. D'autre part, on note que la distance entre deux ouvertures adjacentes du fond de chambre est très faible. Les déflecteurs sont en appui contre le bord des ouvertures par un épaulement 10b1e et 10'b1e respectivement. La paroi du déflecteur 10 se prolonge le long du bord 10d par la languette 10d1 qui recouvre le bord 10'c du déflecteur adjacent 10'. Grâce à l'épaulement 10b1e 10'b1e un espace est ménagé entre la paroi du fond de chambre 16 et les faces arrière des déflecteurs. De l'air sous forme de jet passe par les orifices **16a** pratiqués dans la paroi du fond de chambre entre les deux ouvertures. On note que les déflecteurs sont immobilisés par rapport au fond de chambre par des clips 16b formant avec les épaulements une pince pour la paroi de fond de chambre.

Ainsi la solution de l'invention permet à la fois d'assurer l'étanchéité entre les déflecteurs et le refroidissement par impact de jet d'air dans la zone critique, étroite, située entre les ouvertures de passage des systèmes d'injection.

Dans la réalisation des figures 5 à 7, les déflecteurs sont identiques mais la solution comprend aussi le cas où un premier déflecteur 10 comprend un couvre joint 10c1 et 10d1 le long des deux bords longitudinaux coopérant avec les bords simples 10'c et 10'd d'un second déflecteur 10' sans couvre joint. L'efficacité est la même. Comme cela est montré sur la figure 8. Le montage est cependant différent. Il est plus simple tout en nécessitant la fabrication de deux références de pièces.

## Revendications

1. Chambre de combustion annulaire de moteur à turbine à gaz comprenant une paroi externe, une paroi interne, une paroi reliant les deux parois et constituant un fond de chambre (16), la paroi de fond de chambre (16) étant pourvue d'ouvertures pour des systèmes d'injection de carburant, des déflecteurs (10, 10') de protection thermique étant fixés sur la paroi, les déflecteurs (10, 10') comprenant une portion de paroi plane (10a; 10' a) avec une ouverture par déflecteur centrée sur une ouverture d'un système d'injection de carburant correspondant, les ouvertures étant bordées de collerettes (10b1, 10'b1) par lesquelles les déflecteurs (10, 10') sont fixés dans le fond de chambre (16), les déflecteurs (10, 10') étant en appui contre le bord desdites ouvertures par un épaulement (10b1e, 10'ble) et immobilisés par rapport au fond de chambre (16) par des clips (16b) formant avec les épaulements (10b1e, 10'b1e) une pince pour la paroi de fond de chambre (16), les déflecteurs (10, 10') comprenant deux bords longitudinaux (10c,10d ; 10'c, 10'd) et deux bords transversaux (10e, 10f ; 10'e, 10'f), **caractérisée par le fait qu'**au moins le long de l'un des bords longitudinaux (10d) un déflecteur comporte une languette (10d1), prolongeant la face arrière dudit déflecteur et formant couvre joint, en ménageant un logement (10d10) le long dudit bord pour le bord (10'c) du déflecteur adjacent (10') de façon à rendre étanche la jonction entre les deux bords adjacents des deux déflecteurs, ladite languette (10d1) étant espacée de la paroi du fond de chambre de manière à ménager un espace alimenté en air de refroidissement par des orifices (16a) sur la paroi (16) de fond de chambre.

2. Chambre de combustion selon la revendication 1 dont le logement (10d10) est formé par un décrochement de la paroi (10a).

3. Chambre de combustion selon la revendication 2 dont les collerettes (10b1, 10'b1) sont fixées sur le bord des ouvertures des systèmes d'injection de la paroi (16) du fond de chambre.

4. Chambre de combustion selon la revendication précédente dont les collerettes (10b1, 10'b1) ménagent un jeu entre la paroi (16) du fond de chambre et le couvre joint (10d1) dans la zone comprise entre deux ouvertures adjacentes des systèmes d'injection de carburant dans la chambre de combustion.

5. Chambre de combustion selon l'une des revendications précédentes dont les bords transversaux (10e, 10f ; 10'e, 10'f) des déflecteurs (10, 10') comprennent une portion de paroi incurvée, les logements (10d10) étant ménagés également le long des bords longitudinaux de ladite portion incurvée.

6. Chambre de combustion selon l'une des revendications précédentes dont les déflecteurs comprennent un couvre joint (10d1) le long d'un bord longitudinal et un bord (10c) sans couvre joint le long de l'autre bord longitudinal, les deux bords étant complémentaires pour venir s'adapter à un bord d'un autre même déflecteur disposé bord à bord.

7. Chambre selon l'une des revendications là 5 dont une partie des déflecteurs comprend un couvre joint le long des deux bords longitudinaux.

8. Chambre de combustion selon la revendication 7 dont une partie des déflecteurs comprend deux bords longitudinaux complémentaires desdits couvre joints.

9. Moteur à turbine à gaz comportant une chambre de combustion (10) selon l'une quelconque des revendications 1 à 8.

## Patentansprüche

1. Ringförmige Brennkammer eines Gasturbinenmotors, umfassend eine Außenwand, eine Innenwand, eine Wand, die die beiden Wände verbindet und einen Kammerboden (16) schafft, wobei die Kammerbodenwand (16) mit Öffnungen für Systeme zur Injektion von Kraftstoff ausgestattet ist, wobei Deflektoren (10, 10') zum Wärmeschutz an der Wand befestigt sind, wobei die Deflektoren (10, 10') einen ebenen Wandabschnitt (10a, 10'a) mit einer Öffnung pro Deflektor umfassen, die auf einer Öffnung eines entsprechenden Systems zur Injektion von Kraftstoff zentriert ist, wobei die Öffnungen von Einfassungen (10b1, 10'b1) umrandet sind, durch die die Deflektoren (10, 10') im Kammerboden (16) befestigt sind, wobei die Deflektoren (10, 10') an dem Rand der Öffnungen durch eine Schulter (10b1e, 10'b1e) anliegen und in Bezug auf den Kammerboden (16) durch Clips (16b) immobilisiert sind, die mit den Schultern (10b1e, 10'b1e) eine Klammer für die Bodenkammerwand (16) bilden, wobei die Deflektoren (10, 10') zwei Längsränder (10c, 10d; 10'c, 10'd) und zwei Querränder (10e, 10f; 10'e, 10'f) umfassen, **gekennzeichnet durch** die Tatsache, dass mindestens entlang des einen der Längsränder (10d) ein Deflektor eine Lasche (10d1) beinhaltet, die die hintere Fläche des Deflektors verlängert und eine Fugenabdeckung bildet, indem eine Aufnahme (10d10) entlang des Randes für den Rand (10'c) des benachbarten Deflektors (10') bereitgestellt wird, sodass die Verbindungsstelle zwischen den beiden benachbarten Rändern der beiden Deflektoren abgedichtet wird, wobei die Lasche (10d1) von der Wand des Kammerbodens derart beabstandet ist, dass ein Raum, der mit Kühlluft durch Öffnungen (16a) an der Wand (16) der Bodenkammer versorgt wird, bereitgestellt wird.

2. Brennkammer nach Anspruch 1, wobei die Aufnahme (10d10) durch eine Abweichung der Wand (10a) gebildet wird.

3. Brennkammer nach Anspruch 2, deren Einfassungen (10b1, 10'b1) am Rand der Öffnungen der Systeme zur Injektion der Wand (16) des Kammerbodens befestigt sind.

4. Brennkammer nach dem vorstehenden Anspruch, deren Einfassungen (10b1, 10'b1) ein Spiel zwischen der Wand (16) des Kammerbodens und der Fugenabdeckung (10d1) im Bereich bereitstellen, der zwischen zwei benachbarten Öffnungen der Systeme zur Injektion von Kraftstoff in der Brennkammer enthalten ist.

5. Brennkammer nach einem der vorstehenden Ansprüche, deren Querränder (10e 10f; 10'e, 10'f) der Deflektoren (10, 10') einen gekrümmten Wandabschnitt umfassen, wobei die Aufnahmen (10d10) ebenfalls entlang der Längsränder des gekrümmten Abschnitts bereitgestellt sind.

6. Brennkammer nach einem der vorstehenden Ansprüche, deren Deflektoren eine Fugenabdeckung (10d1) entlang eines Längsrandes und einen Rand (10c) ohne Fugenabdeckung entlang des anderen Längsrandes umfassen, wobei die beiden Ränder komplementär sind, um sich einem Rand eines anderen gleichen Deflektors anzupassen, der Rand an Rand angeordnet ist.

7. Brennkammer nach einem der Ansprüche 1 bis 5, von dem ein Teil der Deflektoren eine Fugenabdeckung entlang der beiden Längsränder umfasst.

8. Brennkammer nach Anspruch 7, von dem ein Teil der Deflektoren zwei Längsränder umfasst, die komplementär zu den Fugenabdeckungen sind.

9. Gasturbinenmotor, der eine Brennkammer (10) nach einem der Ansprüche 1 bis 8 beinhaltet.

## Claims

1. An annular combustion chamber for a gas turbine engine comprising an external wall, an internal wall, a wall connecting these two walls and constituting a chamber end wall (16), the chamber end wall (16) being provided with openings for fuel injection systems, heat shielding deflectors (10,10') being fixed to the wall, the deflectors (10, 10') comprising a flat wall portion (10a, 10'a) with an opening per deflector centred on an opening of a fuel injection system, the openings being bordered by collars (10b1, 10'b1) through which the deflectors (10, 10') are secured to the chamber end wall (16), the deflectors (10, 10') bearing against the edges of said opening by means of a shoulder (10b1e, 10'b1e) and immobilised with respect to the chamber end wall (16) by means of clips (16b) forming with the shoulders (10b1e, 10'b1e) a clamp for the chamber end wall (16), the deflectors (10, 10') comprising two longitudinal edges (10c, 10d; 10'c, 10'd) and two transverse edges (10e, 10f; 10'e, 10'f), **characterised in that** at least along one of the longitudinal edges (10d), a deflector comprises a tongue (10d1), extending from the rear face of said deflector and forming a joint cover, creating a housing (10d10) along said edge for the edge (10'c) of the adjacent deflector (10') so as to seal the junction between the two adjacent edges of the two deflectors, said tongue (10d1) being spaced from the chamber end wall so as to create a space supplied with cooling air via orifices (16a) in the chamber end wall (16).

2. Combustion chamber according to claim 1, in which the housing (10d10) is formed by a discontinuity of the wall (10a).

3. Combustion chamber according to claim 2, in which the collars (10b1, 10'b1) are fixed to the edge of the openings of the injection systems in the chamber end wall (16).

4. Combustion chamber according to the preceding claim, in which the collars (10b1, 10'b1) create a clearance between the chamber end wall (16) and the joint cover (10d1) in the region lying between two adjacent openings for the systems for injecting fuel into the combustion chamber.

5. Combustion chamber according to one of the preceding claims, in which the transverse edges (10e, 10f; 10'e, 10'f) of the deflectors (10, 10') comprise a curved wall portion, the housings (10d10) also being created along the longitudinal edges of said curved portion.

6. Combustion chamber according to one of the preceding claims, in which the deflectors comprise a joint cover (10d1) along a longitudinal edge and an edge (10c) without a joint cover along the other longitudinal edge, the two edges complementing one another so as to fit onto an edge of another like deflector positioned edge-to-edge with it.

7. Chamber according to one of claims 1 to 5, in which a proportion of the deflectors comprises a joint cover along both longitudinal edges.

8. Combustion chamber according to claim 7, in which a proportion of the deflectors comprises two longitudinal edges that complement said joint covers.

9. Gas turbine engine comprising a combustion chamber (10) according to any one f claims 1 to 8.
